# EUROPÄISCHE PATENTSCHRIFT

(11) **EP 2 100 358 B1**
(45) Veröffentlichungstag und Bekanntmachung des Hinweises auf die Patenterteilung: **08.01.2014**
(21) Anmeldenummer: 07847479.8
(22) Anmeldetag: 28.11.2007
(51) Int. Cl.: H02K 1/27

(54) **PERMANENTMAGNETROTOR MIT AUFBIEGUNGEN ZUM FIXIEREN DER PERMANENTMAGNETE DES ROTORPAKETES**
PERMANENT MAGNET ROTOR WITH PROJECTIONS FOR FIXING THE PERMANENT MAGNETS OF THE ROTOR PACKET
ROTOR À AIMANTS PERMANENTS PRÉSENTANT DES GAUCHISSEMENTS DESTINÉS À LA FIXATION DES AIMANTS PERMANENTS DU BLOC ROTOR

(30) Priorität: 01.12.2006 DE 102006056873
(43) Veröffentlichungstag der Anmeldung: 16.09.2009
(73) Patentinhaber: Brose Fahrzeugteile GmbH & Co. KG, 97076 Würzburg (DE)
(72) Erfinder: PODACK, Marcus, 97080 Würzburg (DE)
(74) Vertreter: Isarpatent
(86) Internationale Anmeldenummer: PCT/EP2007/062962
(87) Internationale Veröffentlichungsnummer: WO 2008/065146

(56) Entgegenhaltungen:
- EP-A- 1 009 085
- DE-A1- 19 851 883
- DE-A1-102005 041 676
- US-A- 4 486 679
- US-A1- 2006 119 205

## Beschreibung

Die Erfindung betrifft einen Permanentmagnetrotor, welcher eine Rotorwelle, ein an der Rotorwelle befestigtes Rotorpaket mit einem radial inneren Bereich und einem radial äußeren Bereich, im Rotorpaket zwischen dessen radial innerem Bereich und dessen radial äußerem Bereich vorgesehene Aufnahmetaschen und in den Aufnahmetaschen positionierte Permanentmagnete. aufweist (Siehe EP-A-1009085).

Aus der DE 198 51 883 A1 ist eine permanentmagneterregte Synchronmaschine mit einem aus Blechen geschichteten Läuferpaket bekannt, in das Permanentmagnete eingebettet sind. Zumindest zwischen einer Ausnehmung zur Aufnahme eines aus zumindest einer Magnetplatte bestehenden Permanentmagneten und dem Luftspalt der Synchronmaschine ist wenigstens eine Magnetflusssperre vorgesehen. An dem virtuellen Zusammenstoß zweier Ausnehmungen, die zur Aufnahme der Permanentmagnete dienen, sind die Ausnehmungen so geformt, dass sich außer einer Fixierung der Permanentmagnete auch Streustege ergeben.

Aus der US 4,486,679 A ist ein permanentmagneterregter Rotor für eine elektrische Maschine bekannt. Dieser bekannte Rotor weist in seinem Rotorblechpaket Ausnehmungen auf, in welche Permanentmagnete eingebracht sind. Zwischen benachbarten Ausnehmungen sind in Radialrichtung verlaufende Stege vorgesehen. Zwischen den äußeren Rändern der Ausnehmungen und dem Außenumfang des Rotorblechpaketes befinden sich dünne Brücken. Durch ein Eindrücken der Brücken und der dadurch bedingten Verformung der sich in Radialrichtung erstreckenden Stege werden die Permanentmagnete in den Ausnehmungen fixiert.

Des Weiteren ist es bereits bekannt, in Ausnehmungen eines Rotorpaketes vorgesehene Permanentmagnete innerhalb dieser Ausnehmungen zu verkleben, zu vergießen oder unter Verwendung von Klammern zu befestigen.

Die Aufgabe der Erfindung besteht darin, einen Permanentmagnetrotor, welcher eine Rotorwelle, ein an der Rotorwelle befestigtes Rotorpaket, im Rotorpaket vorgesehene Aufnahmetaschen und in den Aufnahmetaschen positionierte Permanentmagnete aufweist, derart weiterzubilden, dass die Befestigung der Permanentmagnete in den Aufnahmetaschen verbessert ist.

Diese Aufgabe wird durch einen Permanentmagnetrotor mit den im Anspruch 1 angegebenen Merkmalen gelöst. Vorteilhafte Ausgestaltungen und Weiterbildungen eines Permanentmagnetrotors gemäß Anspruch 1 sind in den abhängigen Ansprüchen angegeben.

Die Vorteile eines Permanentmagnetrotors gemäß der Erfindung bestehen darin, dass die Befestigung der Permanentmagnete in den Aufnahmetaschen des Rotorpaketes sehr einfach erfolgen kann. Es müssen lediglich nach dem Einsetzen der Permanentmagnete in die Aufnahmetaschen mittels eines Werkzeugs die zwischen den Aussparungen im radial inneren Bereich des Rotorpaketes und den Aufnahmetaschen gelegenen Teilbereiche des inneren Bereiches radial nach außen gebogen werden, so dass jeweils eine Aufbiegung in Form einer geschlossenen Lasche oder zweier Fortsätze entsteht, welche die jeweilige Aufnahmetasche teilweise verschließt und den jeweiligen Permanentmagneten in der jeweiligen Aufnahmetasche fixiert.

Sollte zu einem späteren Zeitpunkt ein Austausch der Permanentmagnete erforderlich sein, dann kann dies in einfacher Weise erfolgen, indem zunächst die Aufbiegung in ihre ursprüngliche Form zurückgebogen wird, dann der jeweilige Permanentmagnet aus der Aufnahmetasche entfernt und durch einen neuen Permanentmagneten ersetzt wird.

Weitere Vorteile der Erfindung bestehen darin, dass die bei bekannten Permanentmagnetrotoren zur Fixierung der Permanentmagnete in den Aufnahmetaschen benötigten zusätzlichen Bauteile wie Kleber, eine Vergussmasse und/oder Klammern nicht notwendig sind. Die Funktionen dieser zusätzlichen Bauteile werden vollständig von den beanspruchten Aufbiegungen der zwischen der jeweiligen Aussparung und der jeweiligen Aufnahmetasche liegenden Teilbereiche des inneren Bereichs des Rotorpaketes übernommen.

Ein weiterer Vorteil besteht darin, dass bei einem Permanentmagnetrotor das im Betrieb entstehende Magnetfeld durch die beanspruchten Aufbiegungen allenfalls unwesentlich beeinflusst wird. Insbesondere treten keine Beeinträchtigungen des zwischen dem Rotor und dem Stator gebildeten Magnetfeldes auf.

Weitere vorteilhafte Eigenschaften der Erfindung ergeben sich aus deren nachfolgender beispielhafter Erläuterung anhand der Zeichnungen. Es zeigt
- Figur 1: eine Längsschnittdarstellung eines Permanentmagnetrotors gemäß der Erfindung,
- Figur 2: eine Ansicht des in der Figur 1 dargestellten Permanentmagnetrotors in Richtung des in der Figur 1 gezeigten Pfeiles x gemäß einem ersten Ausführungsbeispiel für die Erfindung,
- Figur 3: eine Ansicht des in der Figur 2 dargestellten Sektors 7 nach dem Aufbiegen des zwischen der Ausnehmung und der Aufnahmetasche liegenden Teilbereiches des inneren Bereichs des Rotorpaketes,
- Figur 4: eine Ansicht des in der Figur 1 dargestellten Permanentmagnetrotors in Richtung des in der Figur 1 gezeigten Pfeiles x gemäß einem zweiten Ausführungsbeispiel für die Erfindung,
- Figur 5: eine Ansicht des in der Figur 4 dargestellten Sektors 7 nach dem Aufbiegen des zwischen der Ausnehmung und der Aufnahmetasche liegenden Teilbereiches des inneren Bereichs des Rotorpaketes und
- Figur 6: eine Längsschnittdarstellung eines Permanentmagnetrotors gemäß einer alternativen Ausführungsform der Erfindung.

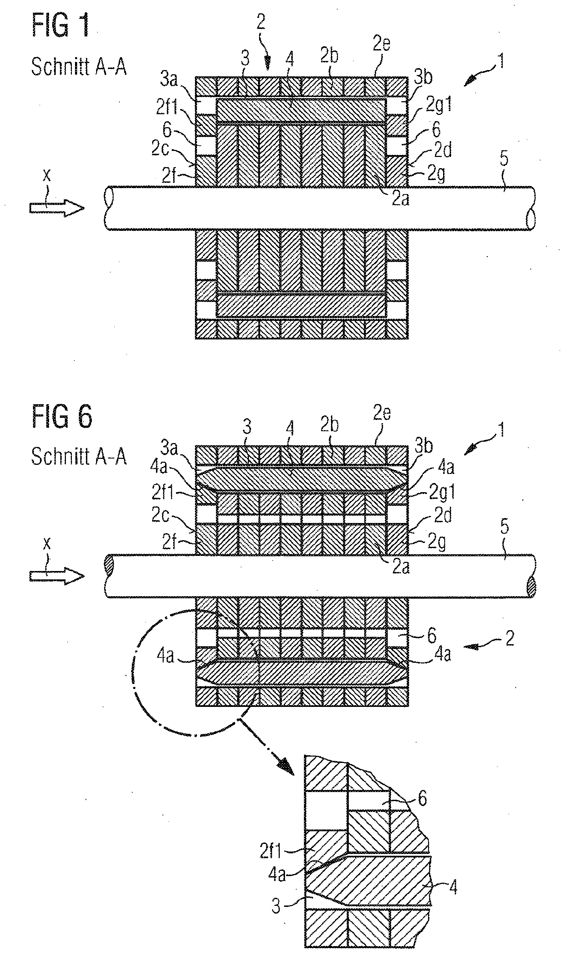

Die Figur 1 zeigt eine Längsschnittdarstellung eines Permanentmagnetrotors 1 gemäß der Erfindung. Dieser weist eine Rotorwelle 5 auf, an welcher ein Rotorpaket 2 befestigt ist.

Bei diesem Rotorpaket handelt es sich um ein Rotorblechpaket, welches aus einer Vielzahl von Blechlamellen bzw. Blechschichten zusammengesetzt ist. Das dargestellte Rotorpaket weist einen inneren Bereich 2a, welcher zwischen der Rotorwelle 5 und Aufnahmetaschen 3 des Rotorpaketes liegt, und einen äußeren Bereich 2b auf, welcher zwischen den Aufnahmetaschen 3 und dem Außenumfang 2e des Rotorpaketes liegt. Ferner weist das gezeigte Rotorpaket 2 Stirnseiten 2c und 2d auf.

In die Aufnahmetaschen 3 des Rotorpaketes 2 sind Permanentmagnete 4 eingesetzt. Das Einsetzen dieser Permanentmagnete 4 in die Aufnahmetaschen 3 erfolgt beispielsweise in Richtung des in der Figur 1 gezeigten Pfeiles x.

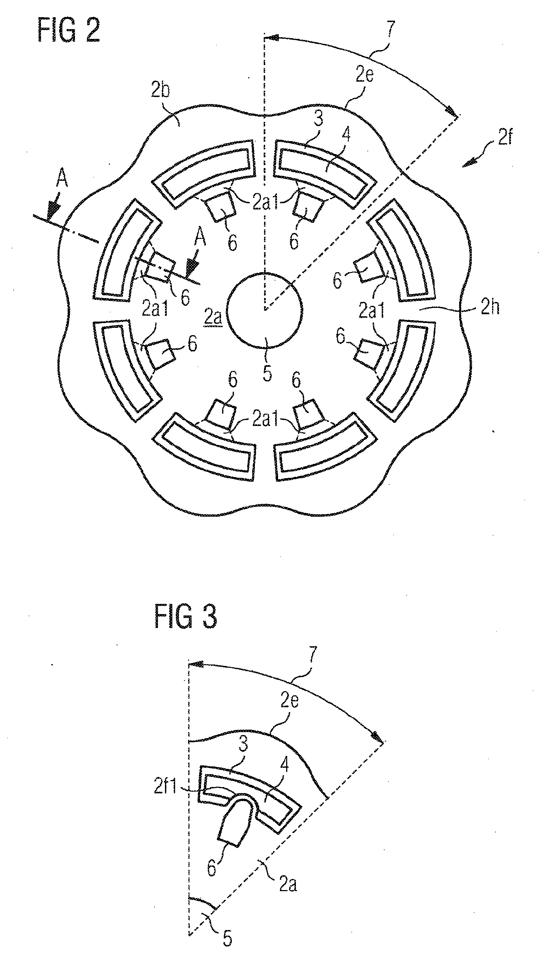

Zur Fixierung der Permanentmagnete 4 in den Aufnahmetaschen 3 dienen Aufbiegungen 2f1 und 2g1, die in der der Stirnseite 2c des Rotorpaketes nächstgelegenen Blechlamelle 2f und in der der Stirnseite 2d des Rotorpaketes nächstgelegenen Blechlamelle 2g vorgesehen sind, wie es unten anhand der Figuren 2 - 5 näher erläutert wird. Mittels dieser Aufbiegungen werden die beiden Öffnungen 3a und 3b der Aufnahmetaschen 3 jeweils teilweise verschlossen, so dass die Permanentmagnete während des Betriebes nicht aus den Aufnahmetaschen herausgeschleudert werden können.

Gemäß einem weiteren, nicht in den Figuren dargestellten Ausführungsbeispiel weisen die Aufnahmetaschen jeweils nur eine Öffnung auf, beispielsweise auf der Stirnseite 2c des Rotorpaketes. Der jeweils andere Endbereich der Aufnahmetaschen ist bei diesem weiteren Ausführungsbeispiel geschlossen. Bei diesem weiteren Ausführungsbeispiel ist es zur Fixierung der Permanentmagnete in den Aufnahmetaschen lediglich notwendig, die auf der Stirnseite 2c des Rotorpaketes vorgesehenen Öffnungen der Aufnahmetaschen jeweils mittels einer Aufbiegung zu verschließen.

Das Rotorpaket 2 besteht - wie bereits oben ausgeführt wurde - aus einer Vielzahl von Blechlamellen. Diese Blechlamellen werden vorzugsweise mittels eines Stanzvorganges hergestellt. Alle Blechlamellen weisen erste Aussparungen auf, bei denen es sich um Freistanzungen handelt. Die Gesamtheit dieser ersten Aussparungen bildet nach dem Zusammensetzen des Rotorblechpaketes die Aufnahmetaschen 3 des Rotorpaketes.

Darüber hinaus enthalten gemäß einer ersten Ausführungsform der Erfindung die der ersten Stirnseite 2c des Blechpakets nächstgelegene Blechlamelle und die der zweiten Stirnseite 2d des Blechpakets nächstgelegene Blechlamelle jeweils weitere Aussparungen 6, bei denen es sich ebenfalls um Freistanzungen handelt. Bei diesen weiteren Aussparungen 6 handelt es sich um die beanspruchten Aussparungen im radial inneren Bereich des Rotorpaketes. Die zwischen diesen weiteren Aussparungen 6 und den Aufnahmetaschen 3 liegenden Teilbereiche des inneren Bereiches 2a werden nach dem Einsetzen der Permanentmagnete aufgebogen, um die Aufnahmetaschen jeweils teilweise zu verschließen und die Permanentmagnete formschlüssig zu fixieren. Bei dieser ersten Ausführungsform weisen alle weiteren Blechlamellen, die zwischen den beiden stirnseitigen Blechlamellen positioniert sind, keine weitere Aussparung auf. Diese erste Ausführungsform ist in der Figur 1 veranschaulicht.

Gemäß einer zweiten Ausführungsform, bei welcher die Aufnahmetaschen lediglich auf der ersten Stirnseite des Rotorpaketes mit Öffnungen versehen sind, weisen wiederum alle Blechlamellen die ersten Aussparungen auf, die in ihrer Gesamtheit die Aufnahmetaschen für die Permanentmagnete bilden. Bei dieser zweiten Ausführungsform weist lediglich die der ersten Stirnseite nächstgelegene Blechlamelle die im radial inneren Bereich vorgesehenen weiteren Aussparungen auf, so dass nach dem Einsetzen der Permanentmagnete in die Aufnahmetaschen durch eine Aufbiegung der zwischen der jeweiligen weiteren Aussparung und der jeweiligen Aufnahmetasche liegenden Teilbereiche des inneren Bereiches ein teilweises Verschließen der Öffnungen der Aufnahmetaschen erfolgen kann, so dass die Permanentmagnete formschlüssig fixiert sind.

Gemäß einer dritten Ausführungsform weisen alle Blechlamellen des Rotorpaketes sowohl die ersten Aussparungen als auch die zweiten Aussparungen auf. Zum teilweisen Verschließen der Aufnahmetaschen werden bei dieser dritten Ausführungsform lediglich die zwischen den Aussparungen und der Aufnahmetasche liegenden Teilbereiche des inneren Bereiches derjenigen Blechlamellen aufgebogen, die der Stirnseite bzw. den Stirnseiten des Rotorpaketes am nächsten liegen. Der Vorteil dieser dritten Ausführungsform besteht darin, dass alle Blechlamellen des Rotorpaketes mittels eines Stanzvorganges in übereinstimmender Weise hergestellt werden können.

Gemäß einer vorteilhaften Weiterbildung der Erfindung können zusätzlich auch die zwischen den Aussparungen und den Aufnahmetaschen liegenden Teilbereiche des inneren Bereiches der im axial mittleren Bereich des Rotorpaketes positionierten Blechlamellen aufgebogen werden, so dass die Permanentmagnete auch kraftschlüssig in den Aufnahmetaschen fixiert sind.

Die Figur 2 zeigt eine Ansicht des in der Figur 1 dargestellten Permanentmagnetrotors in Richtung des in der Figur 1 gezeigten Pfeiles x gemäß einem ersten Ausführungsbeispiel der Erfindung. Diese Ansicht veranschaulicht die Form der der Stirnseite 2c des Rotorpaketes nächstgelegenen Blechlamelle 2f.

Aus dieser Figur 2 ist ersichtlich, dass bei diesem Ausführungsbeispiel der Außenumfang 2e der Lamelle 2f nicht kreisförmig verläuft, sondern eine im wesentlichen sinusförmig ausgebildete Form hat. Der Außenumfang der weiteren Lamellen des Rotorpaketes hat dieselbe Form wie der Außenumfang der Lamelle 2f.

Des Weiteren geht aus der Figur 2 hervor, dass die Blechlamelle 2f insgesamt 8 erste Aussparungen 3 aufweist, welche zusammen mit entsprechenden ersten Aussparungen der weiteren Lamellen die Aufnahmetaschen für die Permanentmagnete 4 bilden. Diese Aufnahmetaschen 3 sind äquidistant über den Umfang der Blechlamelle verteilt. Zwischen benachbarten Aufnahmetaschen 3 sind jeweils Stege 2h vorgesehen. Zwischen der Welle 5 und den Aufnahmetaschen 3 befindet sich der radial innere Bereich 2a der Blechlamelle. Zwischen den Aufnahmetaschen 3 und dem Außenumfang 2e befindet sich der radial äußere Bereich 2b der Blechlamelle.

Ferner geht aus der Figur 2 hervor, dass im radial inneren Bereich 2a weitere Aussparungen 6 vorgesehen sind, bei denen es sich um Freistanzungen handelt. Die zwischen diesen weiteren Aussparungen 6 und den Aufnahmetaschen 3 liegenden Teilbereiche 2a1 des radial inneren Bereiches 2a werden nach dem Einsetzen der Permanentmagnete 4 in die Aufnahmetaschen 3 mittels eines Werkzeugs in Radialrichtung nach außen gebogen, um die Permanentmagnete 4 in den Aufnahmetaschen 3 formschlüssig zu fixieren.

Dieser aufgebogene Zustand ist in der Figur 3 veranschaulicht, in welcher der in der Figur 2 gezeigte Sektor 7 der Blechlamelle 2f dargestellt ist. Aus der Figur 3 ist ersichtlich, dass durch das Aufbiegen des zwischen der Aussparung 6 und der Aufnahmetasche 3 dieses Sektors liegenden Teilbereiches 2a1 eine Aufbiegung in Form einer geschlossenen Lasche 2f1 entsteht, die den Permanentmagneten 4 in der Aufnahmetasche 3 fixiert.

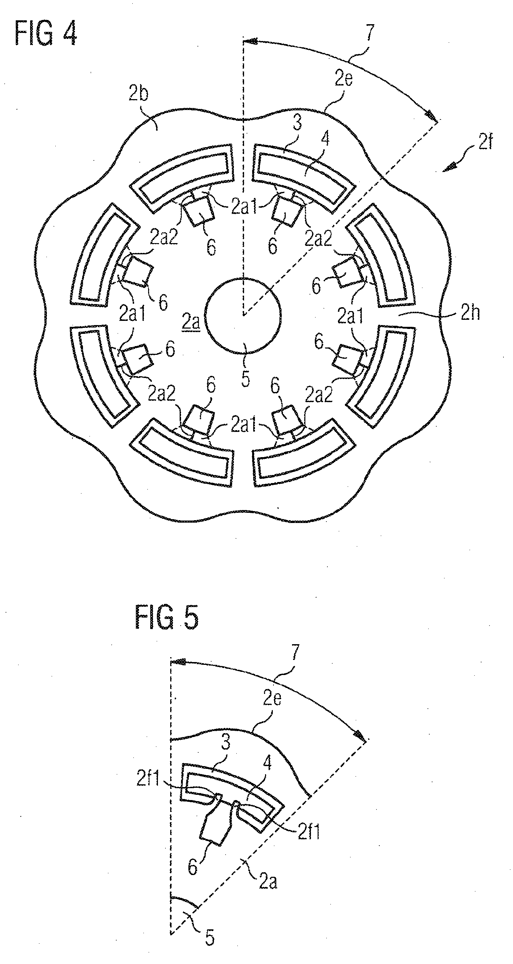

Die Figur 4 zeigt eine Ansicht des in der Figur 1 dargestellten Permanentmagnetrotors in Richtung des in der Figur 1 gezeigten Pfeiles x gemäß einem zweiten Ausführungsbeispiel der Erfindung. Auch diese Ansicht veranschaulicht die Form der der Stirnseite 2c des Rotorpaketes nächstgelegenen Blechlamelle 2f.

Die in der Figur 4 gezeigte Blechlamelle 2f stimmt mit der in der Figur 2 gezeigten Blechlamelle 2f weitgehend überein. Sie unterscheidet sich von dieser aber dadurch, dass die zwischen den weiteren Aussparungen 6 und den Aufnahmetaschen 3 liegenden Teilbereiche 2a1 des inneren Bereiches 2a jeweils mit einem Schlitz 2a2 versehen sind. Diese Schlitze 2a2 erleichtern das Aufbiegen der zwischen den weiteren Aussparungen 6 und den Aufnahmetaschen 3 liegenden Teilbereiche 2a1.

Dieser aufgebogene Zustand ist in der Figur 5 veranschaulicht, in welcher der in der Figur 4 gezeigte Sektor 7 der Blechlamelle 2f dargestellt ist. Aus der Figur 5 ist ersichtlich, dass durch das Aufbiegen des zwischen der Aussparung 6 und der Aufnahmetasche 3 dieses Sektors liegenden Teilbereichs 2a1 eine Aufbiegung in Form zweier radial nach außen gerichteter Fortsätze entsteht, welche den Permanentmagneten 4 in der Aufnahmetasche 3 fixieren.

Die Figur 6 zeigt eine Längsschnittdarstellung eines Permanentmagnetrotors gemäß einer alternativen Ausführungsform der Erfindung. Der Permanentmagnetrotor gemäß dieser alternativen Ausführungsform stimmt weitgehend mit dem oben beschriebenen Permanentmagnetrotor gemäß der dritten Ausfürhungsform überein. Er unterscheidet sich jedoch von diesem dadurch, dass die Permanentmagnete in ihren Endbereichen Abschrägungen 4a aufweisen und dass die Aufbiegungen 2f1 und 2g1 des zwischen der jeweiligen Aussparung und der jeweiligen Aufnahmetasche liegenden Teilbereiches des inneren Bereiches die Permanentmagnete jeweils im Bereich dieser Abschrägungen fixieren. Bei dieser alternativen Ausführungsform können die Permanentmagnete an den Stirnseiten des Rotorpaketes mit der jeweiligen Endlamelle abschließen. Es sind an den Stirnseiten des Rotorpaketes keine zusätzlichen Endlamellen notwendig, die in Richtung der Stirnseiten des Rotorpaketes über die Permanentmagnete hinausragen.

Gemäß der vorstehend beschriebenen Erfindung können die bei bekannten Permanentmagnetrotoren zur Fixierung der Permanentmagnete vorgesehenen zusätzlichen Bauteile wie Kleber, Vergussmasse und/oder Klammern entfallen. Deren Funktion wird bei der vorliegenden Erfindung durch Aufbiegungen der zwischen den im radial inneren Bereich des Rotorpaketes vorgesehenen Aussparungen und den Aufnahmetaschen liegenden Teilbereiche des inneren Bereiches übernommen.

Im Betrieb sind die Permanentmagnete aufgrund ihrer Magnetisierung von sich aus grundsätzlich vor einem Verrutschen innerhalb der jeweiligen Aufnahmetasche gesichert, da sie durch die herrschenden magnetischen Kräfte in der Mitte der jeweiligen Aufnahmetasche gehalten werden. Treten aber im Betrieb starke Beschleunigungen auf, könnte es trotz alledem zu einem Verrutschen der Permanentmagnete innerhalb der jeweiligen Aufnahmetasche und ggf. zu einem Herausschleudern der Permanentmagnete aus den Aufnahmetaschen kommen. Dies wird beim erfindungsgemäßen Permanentmagnetrotor durch die oben beschriebenen Aufbiegungen verhindert, welche die bei der Beschleunigung auftretenden Kräfte aufnehmen können.

Bei dem oben beschriebenen Permanentmagnetrotor handelt es sich vorzugsweise um einen für einen Stellantrieb eines Kraftfahrzeugs vorgesehenen Permanentmagnetrotor. Der Stellantrieb dient beispielsweise als Scheibenwischermotor, als Fensterhebermotor, als Lenkungsmotor oder als Motor für eine elektrische Sitzverstellung.

## Patentansprüche

1. Permanentmagnetrotor, welcher eine Rotorwelle (5), ein an der Rotorwelle befestigtes Rotorpaket (2) mit einem radial inneren Bereich (2a) und einem radial äußeren Bereich (2b), im Rotorpaket zwischen dessen radial innerem Bereich (2a) und dessen radial äußerem Bereich (2b) vorgesehene Aufnahmetaschen (3) und in den Aufnahmetaschen positionierte Permanentmagnete (4) aufweist,
**dadurch gekennzeichnet,**
**dass** im radial inneren Bereich (2a) des Rotorpaketes Aussparungen (6) vorgesehen sind und die Permanentmagnete (4) in der jeweils zugehörigen Aufnahmetasche (3) mittels einer durch eine Aufbiegung (2f1,2g1) des zwischen der jeweiligen Aussparung (6) und der jeweiligen Aufnahmetasche(3) liegenden Teilbereiches (2a1) des inneren Bereiches (2a) fixiert sind.

2. Permanentmagnetrotor nach Anspruch 1,
**dadurch gekennzeichnet,**
**dass** die Aussparungen (6) Freistanzungen sind.

3. Permanentmagnetrotor nach Anspruch 1 oder 2,
**dadurch gekennzeichnet,**
**dass** die zwischen den Aussparungen (6) und den Aufnahmetaschen (3) liegenden Teilbereiche (2a1) des inneren Bereiches (2a) geschlossen ausgeführt sind und die Aufbiegungen (2f1) geschlossene Laschen sind

4. Permanentmagnetrotor nach Anspruch 1 oder 2,
**dadurch gekennzeichnet,**
**dass** die zwischen den Aussparungen (6) und den Aufnahmetaschen (3) liegenden Teilbereiche (2a1) des inneren Bereiches (2a) jeweils Schlitze (2a2) aufweisen und die Aufbiegungen (2f1) jeweils die jeweilige Aufnahmetasche teilweise verschließende Fortsätze sind.

5. Permanentmagnetrotor nach einem der vorherigen Ansprüche,
**dadurch gekennzeichnet,**
**dass** die Aufbiegungen (2f1,2g1) jeweils in der Nähe des mittleren Bereiches eines Permanentmagneten (4) positioniert sind.

6. Permanentmagnetrotor nach einem der vorherigen Ansprüche,
**dadurch gekennzeichnet,**
**dass** das Rotorpaket (2) aus einer Vielzahl von Blechlamellen besteht und die einer Stirnseite (2c) des Rotorpaketes nächstgelegene Blechlamelle mit der Aussparung (6) versehen ist.

7. Permanentmagnetrotor nach Anspruch 6,
**dadurch gekennzeichnet,**
**dass** auch die der anderen Stirnseite (2d) des Blechpaketes nächstgelegene Blechlamelle eine Aussparung (6) aufweist.

8. Permanentmagnetrotor nach Anspruch 7,
**dadurch gekennzeichnet,**
**dass** alle Blechlamellen des Rotorpaketes (2) eine Aussparung (6) aufweisen.

9. Permanentmagnetrotor nach einem der vorherigen Ansprüche,
**dadurch gekennzeichnet,**
**dass** die Permanentmagnete jeweils in mindestens einem ihrer Endbereiche Abschrägungen (4a) aufweisen und die Aufbiegungen (2f1,2g1) die Permanentmagnete (4) im Bereich der Abschrägungen fixieren.

10. Permanentmagnetrotor nach Anspruch 8 oder 9,
**dadurch gekennzeichnet,**
**dass** die im axial mittleren Bereich des Rotorpaketes positionierten Blechlamellen Aufbiegungen aufweisen, um die Permanentmagnete kraftschlüssig in den Aufnahmetaschen zu fixieren.

## Claims

1. Permanent magnet rotor, which comprises a rotor shaft (5), a rotor packet (2), which is fastened to the rotor shaft and has a radially inner region (2a) and a radially outer region (2b), receiving cavities (3), which are provided in the rotor packet between the radially inner region (2a) and the radially outer region (2b) thereof, and permanent magnets (4), which are positioned in the receiving cavities (3), **characterised in that** clearances (6) are provided in the radially inner region (2a) of the rotor packet, and the permanent magnets (4) are each fixed in the associated receiving cavity (3) by means of an arch (2f1, 2g1) of the sub-region (2a1), positioned between the respective clearance (6) and the respective receiving cavity (3), of the inner region (2a).

2. Permanent magnet rotor according to claim 1, **characterised in that** the clearances (6) are free press cuts.

3. Permanent magnet rotor according to either claim 1 or claim 2, **characterised in that** the sub-regions (2a1), positioned between the clearances (6) and the receiving cavities (3), of the inner region (2a) are closed in form, and the arches (2f1) are closed links.

4. Permanent magnet rotor according to either claim 1 or claim 2, **characterised in that** the sub-regions (2a1), positioned between the clearances (6) and the receiving cavities (3), of the inner region (2a) each comprise slots (2a2), and the arches (2f1) are each projections which seal the respective receiving cavity in part.

5. Permanent magnet rotor according to any one of the preceding claims, **characterised in that** the arches (2f1, 2g1) are each positioned close to the central region of a permanent magnet (4).

6. Permanent magnet rotor according to any one of the preceding claims, **characterised in that** the rotor packet (2) consists of a plurality of sheet metal lamellae, and the sheet metal lamella closest to one end face (2c) of the rotor packet is provided with the clearance (6).

7. Permanent magnet rotor according to claim 6, **characterised in that** the sheet metal lamella closest to the other end face (2d) of the sheet metal packet also comprises a clearance (6).

8. Permanent magnet rotor according to claim 7, **characterised in that** all of the sheet metal lamellae of the rotor packet (2) comprise a clearance (6).

9. Permanent magnet rotor according to any one of the preceding claims, **characterised in that** the permanent magnets each comprise bevels (4a) in at least one of the end regions thereof, and the arches (2f1, 2g1) fix the permanent magnets (4) in the region of the bevels.

10. Permanent magnet rotor according to either claim 8 or claim 9, **characterised in that** the sheet metal lamellae positioned in the axially central region of the rotor packet comprise arches so as to fix the permanent magnets non-positively in the receiving cavities.

## Revendications

1. Rotor à aimants permanents, qui présente un axe de rotor (5), un bloc rotor fixé à l'axe de rotor (2) avec une zone radialement intérieure (2a) et une zone radialement extérieure (2b), des poches de réception (3) prévues dans le bloc rotor entre sa zone radialement intérieure (2a) et sa zone radialement extérieure (2b), et des aimants permanents (4) disposés dans les poches de réception, **caractérisé par le fait que** des évidements (6) sont prévus dans la zone radialement intérieure (2a) du bloc rotor et les aimants permanents (4) sont fixés dans la poche de réception (3) respectivement associée par un gauchissement (2f1, 2g1) de la zone partielle (2a1) de la zone intérieure (2a), située entre l'évidement (6) respectif et la poche de réception (3) respective.

2. Rotor à aimants permanents selon la revendication 1, **caractérisé par le fait que** les évidements (6) sont des découpes libres.

3. Rotor à aimants permanents selon la revendication 1 ou 2, **caractérisé par le fait que** les zones partielles (2a1) se trouvant entre les évidements (6) et les poches de réception (3) de la zone intérieure (2a) sont réalisées de manière fermée et les gauchissements (2f1) sont des pattes fermées.

4. Rotor à aimants permanents selon la revendication 1 ou 2, **caractérisé par le fait que** les zones partielles (2a1) se trouvant entre les évidements (6) et les poches de réception (3) de la zone intérieure (2a) présentent respectivement des fentes (2a2) et les gauchissements (2f1) sont respectivement des prolongements fermant partiellement la poche de réception respective.

5. Rotor à aimants permanents selon l'une des revendications précédentes, **caractérisé par le fait que** les gauchissements (2f1, 2g1) sont positionnés respectivement à proximité de la zone centrale d'un aimant permanent (4).

6. Rotor à aimants permanents selon l'une des revendications précédentes, **caractérisé par le fait que** le bloc rotor (2) est constitué d'une pluralité de lamelles de tôle et que la lamelle de tôle la plus plus proche d'une face avant (2c) du bloc rotor est pourvue d'un évidement (6).

7. Rotor à aimants permanents selon la revendication 6, **caractérisé par le fait que** la lamelle de tôle la plus proche de l'autre face avant (2d) du bloc rotor présente également un évidement (6).

8. Rotor à aimants permanents selon la revendication 7, **caractérisé par le fait que** toutes les lamelles de tôle du bloc rotor (2) présentent un évidement (6).

9. Rotor à aimants permanents selon l'une des revendications précédentes, **caractérisé par le fait que** les aimants permanents présentent respectivement des chanfreins (4a) dans au moins une de leurs zones terminales et les gauchissements (2f1, 2g1) fixent les aimants permanents (4) dans la zone des chanfreins.

10. Rotor à aimants permanents selon la revendication 8 ou 9, **caractérisé par le fait que** les lamelles de tôle positionnées dans la zone axialement centrale du bloc rotor présentent des gauchissements pour fixer les aimants permanents par adhérence dans les poches de réception.
